# EUROPEAN PATENT SPECIFICATION

(11) **EP 2 424 002 B1**
(45) Date of publication and mention of the grant of the patent: **19.03.2014**
(21) Application number: 11178942.6
(22) Date of filing: 25.08.2011
(51) Int. Cl.: H01M 2/10, H01M 2/20, H01M 10/42

(54) **Battery array and battery pack having the same**
Batterieanordnung und daraus aufgebauter Batteriepack
Réseau de batterie et bloc-batterie l'utilisant

(30) Priority: 26.08.2010 US 377394 P; 03.03.2011 US 201113040241
(43) Date of publication of application: 29.02.2012
(73) Proprietor: Samsung SDI Co., Ltd., Yongin-si, Gyeonggi-do (KR)
(72) Inventor: Hwang, Kum-Yul, Gyeonggi-do (KR)
(74) Representative: Mounteney, Simon James

(56) References cited:
- DE-A1-102007 000 504
- US-A1- 2007 099 073
- US-A1- 2008 286 634

## Description

### BACKGROUND

### 1. Field of the Invention

The present invention relates to a battery pack and a battery array.

### 2. Discussion of Related Art

As a variety of mobile devices has been widely developed in recent years, primary and secondary batteries have extensively been used to power them.

Power sources used in mechanical or middle and heavy electronic apparatuses need to offer a high output. As a consequence high-capacity batteries or a plurality of standard batteries are typically employed.

When the required voltage is higher than the voltage available from a single battery, a plurality of batteries is usually connected in series in order to increase the voltage. Meanwhile, when the required capacity is larger than the capacity of a single battery, a plurality of batteries is usually connected in parallel in order to increase the capacity.

A plurality of batteries connected in series and/or in parallel is referred to as a "battery array" in this document. Furthermore, a group of y batteries connected in parallel are referred to as a "bundle" and a structure of x bundles connected in series is expressed as "xSyP" (x Series y Parallel).

A typical arrangement and connection of batteries in an array can be simply expressed using the following steps.

First step: determine the number of batteries that are to be connected in parallel in order to provide the necessary capacity and form them into bundles.

Second step: dispose the bundles in series in order to provide the required voltage.

Third step: connect the batteries in each bundle and connect the bundles in series.

In this explanation, the third step is somewhat conceptual and does not imply that the bundles should be electrically connected or connected by specific members.

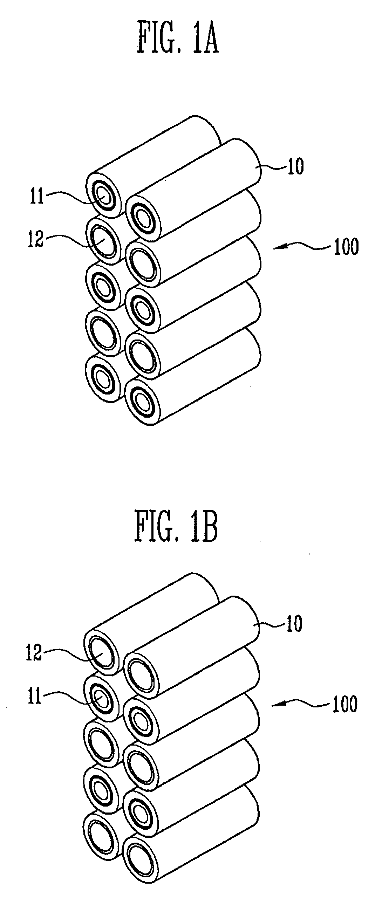

The connection configuration of a 5S2P battery array is described hereafter in accordance with the above steps and with reference to FIG.s 1A and 1B. FIG. 1A is a perspective view showing multi-battery array and FIG. 1B is a perspective view showing the other side of the battery array of FIG. 1A.

First, the batteries are divided into bundles in accordance with the first step. "2P" indicates that two batteries are connected in parallel in each bundle, therefore, the bundles are each composed of two batteries 10, with their terminals correspondingly arranged. In this configuration, the total number of bundles is five. This is denoted by "5S", that is, the number of bundles that are to be connected in series.

The bundles are arranged in series in accordance with the second step. In this step, the bundles are stacked on one another. In this particular configuration, on one side of the arrangement, it can be seen that anodes 11 are positioned at the uppermost position, and electrodes of the bundles are alternately arranged with vertical layers. As shown in FIG. 1B, the electrodes of the batteries are arranged opposite to the electrodes shown in FIG. 1A, at the other side of the array. In other words, cathodes 12 are positioned at the uppermost position of the other side and so on.

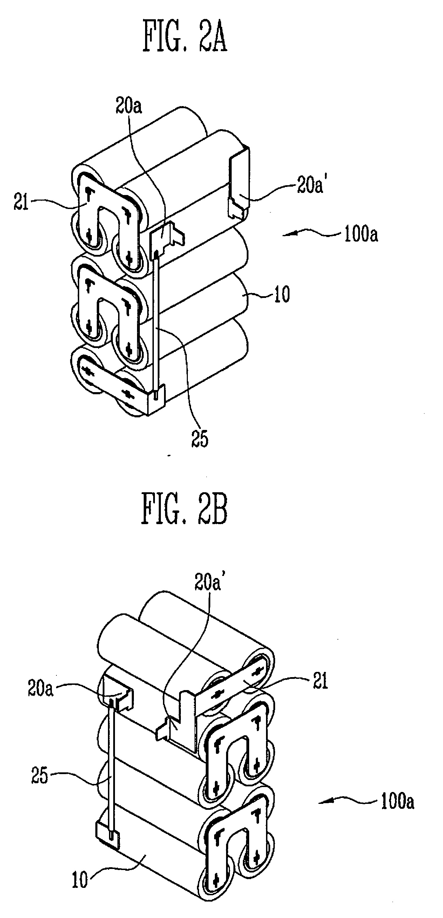

Next, the connection relationship of the battery arrays 100 will be described in accordance with the third step. FIG. 2A is a perspective view showing how the batteries are connected by connection tabs 21 and FIG. 2B is a perspective view showing the other side of FIG. 2A.

First, it can be seen that two batteries 10 are connected in each bundle. Furthermore, the bundles are connected in series from the output terminals 20a, 20a'. In this configuration, it is necessary to use specific conductors 25 in order to reduce the distance between the output terminals 20a, 20a', which is disadvantageous economically and spatially.

US 2008/0286634 relates to a battery pack comprising cylindrical battery cells, with each set of paired battery cells being connected in parallel.

### SUMMARY OF THE INVENTION

The present invention sets out to provide a battery array having its electrode terminals at the minimum distance from each other, and a battery pack including the battery array.

Accordingly, the invention provides a battery array as set out in Claim 1.

Preferred features of the invention are set out in Claims 2 to 10.

A battery assembly according to the invention therefore enables reduction of the distance between the output terminals of the array. Such an array simplifies manufacturing costs and efficiency and results in a more stable structure that has improved resistance to damage.

### BRIEF DESCRIPTION OF THE DRAWINGS

FIG. 1A is a perspective view showing a multi-battery array;
FIG. 1B is a perspective view showing the other side of the battery array of FIG. 1A;
FIG. 2A is a perspective view showing the battery array of FIG. 1A connected by connection tabs;
FIG. 2B is a perspective view showing the other side of the battery array of FIG. 2A;
FIG. 3A is a conceptual diagram illustrating positions of batteries at each side of a battery array structure;
FIG. 3B is a conceptual diagram the battery array structure of Figure 3A projected from one side;
FIG. 4A is a conceptual diagram showing one side of a 5S2P battery array according to the present invention;
FIG. 4B is a conceptual diagram showing the other side of the battery array of FIG. 4A;
FIG. 4C is a conceptual diagram of the battery array of FIG. 4A, projected from one side to the other side;
FIG. 4D is a perspective view showing one side of the battery array of FIG. 4C;
FIG. 4E is a front view schematically showing the battery array provided with output terminals;
FIG. 4F is a perspective view showing the other side of the battery array of FIG. 4C;
FIG. 4G to 4I show alternative embodiments in which the individual batteries are arranged with the same configuration as the embodiment FIG.s 4A to 4F, but individual batteries have different shapes;
FIG. 5A is a conceptual diagram showing one side of an 7S2P battery array according to the present invention;
FIG. 5B is a conceptual diagram showing the other side of the battery array of FIG. 5A;
FIG. 5C is a conceptual diagram of the battery array of FIG. 5A, projected from one side to the other side;
FIG. 6A is a conceptual diagram showing one side of a 3S2P battery array according to the present invention;
FIG. 6B is a conceptual diagram showing the other side of the battery array of FIG. 6A;
FIG. 6C is a conceptual diagram of the battery array of FIG. 6A, projected from one side to the other side;
FIG. 7 is an exploded perspective view showing an embodiment of a battery pack having a battery array;
FIG. 8 is a conceptual diagram showing one side of a 3S2P battery array according to the present invention; and
FIG. 9 is a conceptual diagram showing one side of a 3S4P battery array according to the present invention.

### DETAILED DESCRIPTION OF THE INVENTION

Hereinafter, embodiments of the present invention will be described with reference to the accompanying drawings. The terms representing directions, such as "up, down, left, right" used herein are considered to be based on the status shown in the drawings, if not specifically defined or stated. Further, the same reference numerals represent the same parts throughout the embodiments.

The present invention provides a battery array having a new arrangement structure to minimize the distance between the output terminals in the battery array. The batteries are arranged in a single layer having first and second aspects defined by the batteries which respectively fall at first and second sides (P1 and P2) of the layer. The array may form part of a structure that includes additional batteries and/or layers. These additional batteries may or may not in themselves define additional arrays within the scope of the invention.

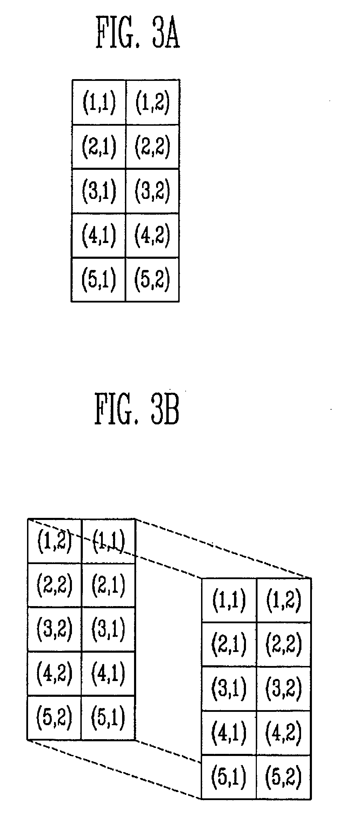

A coordinate system as shown in FIGS. 3A and 3B will be used to simply explain the arrangement of the batteries of the present invention. FIG. 3A is a conceptual diagram illustrating the position of batteries at one side of a battery array structure such as used in a number of embodiments of the invention and FIG. 3B is a conceptual diagram of the battery array structure, projected from one side. The coordinates of FIG. 3A are used when one side and the other with the electrodes are directly seen. The coordinates of FIG. 3B are used when the battery arrays are projected from one side to the other side. In this configuration, the coordinates of the other side is the same as when it is directly seen, that is, when the structure of FIG. 3A is horizontally turned, that is, when the structure of FIG. 3A is horizontally turned at 180°.

Referring to FIGS. 3A and 3B, the battery array 100 comprises a total of ten batteries arranged in five rows and two columns, when seen from one side. Within this structure, the left first column is composed of five rows of (1,1), (2,1), (3,1), (4,1) and (5,1) and the right second column is composed of five rows of 1,2), (2,2), (3,2), (4,2) and (5,2). FIG. 3B illustrates the arrangement of FIG. 3A from the front to the rear, in which the position of the rows of the rear is the same as the front, but the coordinates of the columns are spatially opposite.

Hereinafter, the term "bundle" implies a plurality of batteries arranged in parallel with the same polarities arranged in the same direction. The bundles may be horizontally or vertically arranged in the battery array.

The present invention may be applied to battery arrays of a (2N+1)S(M+1)P structure, in which two or more batteries (M+1)P arranged in parallel is defined as one bundle and total (2N+1) bundles are connected in series. N and M are natural numbers. Hereinafter, each of 5S2P, 7S2P,3S2P, 3S3P and 3S4P are specifically described as examples of embodiments of the invention, although the invention is not limited to these structures.

<Embodiment 1>

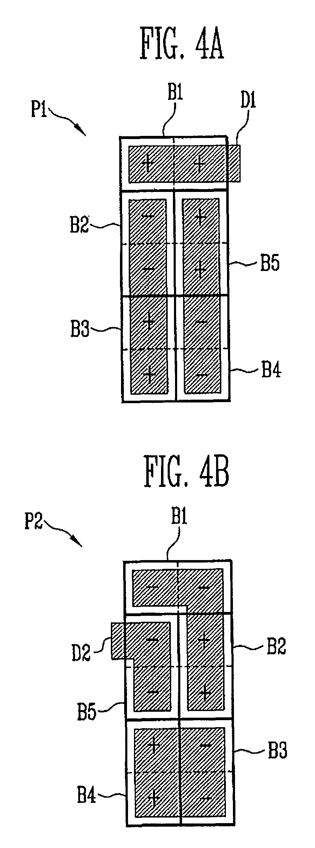

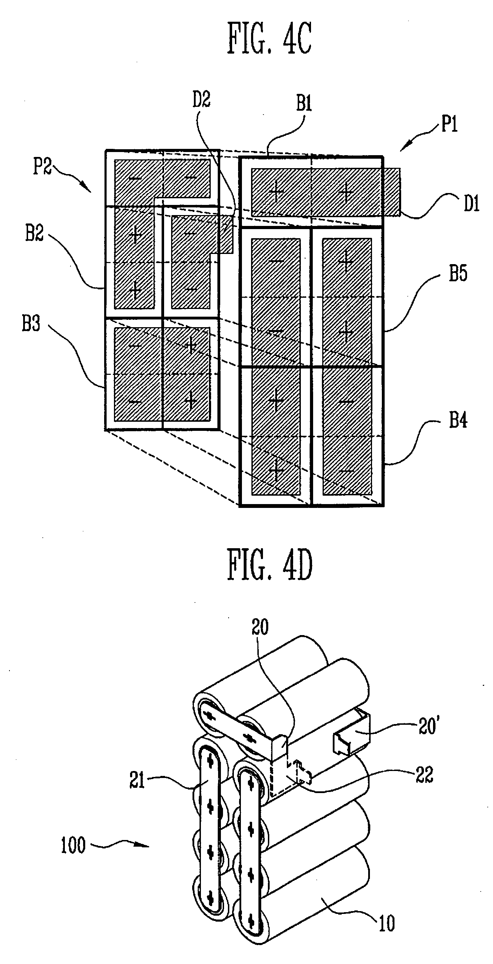

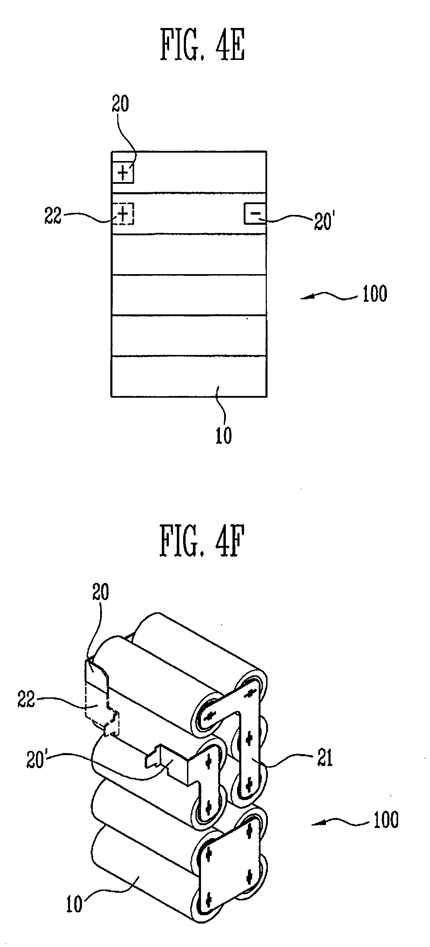

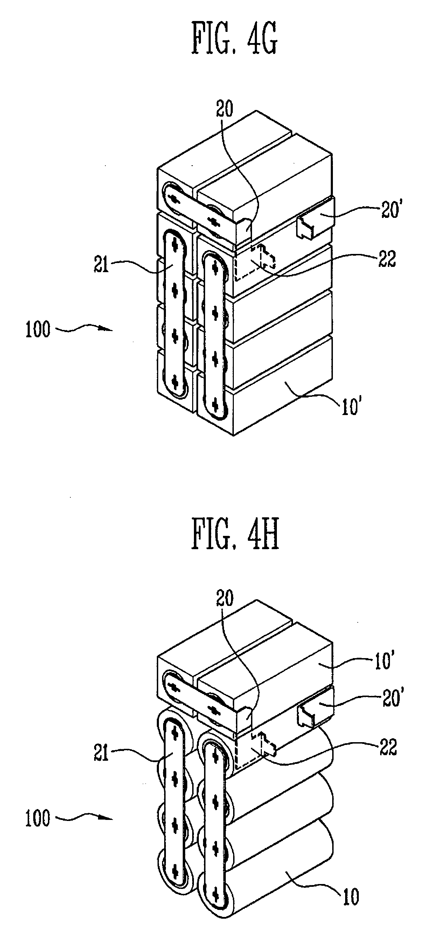

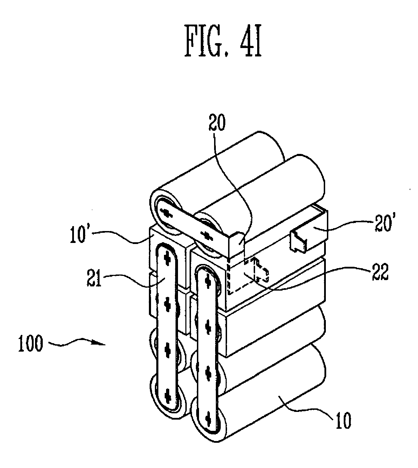

In this embodiment of the invention N is 2 and M is 1. That is to say it is a, 5S2P battery array. The battery array 100 of Embodiment 1 will be described in accordance with the arrangement order of batteries described above. FIG. 4A is a conceptual view showing one side P1 and FIG. 4B is a conceptual view showing the other side P2. FIG. 4C shows the side P1 and the other side P2 projected from the side P1. As described above, when the other side P2 of FIG. 4C is horizontally rotated, this view is the same as that of FIG. 4B.

The present embodiment, as shown in FIG. 4D, takes the form of battery array 100 that includes a plurality of batteries 10, connection tabs 21 connecting the batteries 10, a first output terminal 20 positioned at one side of any one of the batteries, and a second output terminals 20' positioned at the other side of the battery adjacent to the battery having the first output terminal 20.

For this configuration, each bundle is composed of two parallel batteries, as described above. A total of five bundles are provided.

As shown in FIG. 4A, the batteries of the first bundle B1 are horizontally arranged in the first column and the second column of the first row with their anodes together and located in side P1. Next, the second bundle B2 and the third bundle B3 are vertically arranged in the second, third, fourth, and fifth rows of the first column, with their respective polarities alternating. Next, the fourth bundle B4 and the fifth bundle B5 are inversely arranged from the fifth row to the second row of second column, with their respective polarities alternately arranged.

Consequently, in Embodiment 1, the first bundle B1 is horizontally arranged with its anodes in the first and second columns of the first row of P1, the second bundle B2 is arranged in the second and third rows of the first column such that its cathodes are located in P1, and the third bundle B3 is sequentially vertically arranged in the fourth and fifth rows of the first column such that its anodes are located in P1. Thereafter, the fourth bundle B4 is vertically arranged in the fifth and fourth rows of the second column such that its cathodes are located in P1 and the fifth bundle B5 is vertically arranged in the third and second rows of the second column such that its anodes are located in P1. In this arrangement, the polarities of the bundles are opposite on the other side P2, as shown in FIG. 4B. This can be clearly seen from the conceptual projection diagram of FIG. 4C.

The position of the first bundle is not limited to that of this embodiment. For example, the first bundle may be arranged in the position of one of the second to fifth bundles.

Next, the connections between the batteries will be described with reference to FIG. 4C.

From FIG. 4C, it will be seen that the batteries of each bundle are mutually connected in order to form parallel connections.

The bundles are also connected to each other to form series connections. In this regard, the first bundle B1 and the second bundle B2 are sequentially connected at the side P2 and the second bundle B2 and the third bundle B3 are sequentially connected at the side P1. Thereafter, the third bundle B3 and the fourth bundle B4 are sequentially connected at the side P2 and the fourth bundle B4 and the fifth bundle B5 are sequentially connected at the side P1. In this configuration, the anode output terminal can extend from the connection tab in the first row and second column (1,2) on the side P1, and the cathode output terminal D2 can extend from the connection tab in the second row and first column (2,1) on the side P2.

As a consequence, unlike the common 5S2P battery arrays 100a (see FIG. 2A), the distance between the anode and the cathode output terminal 20, 20' can be minimized. The location of the anode and the cathode output terminals 20, 20' depends upon the arrangement positions of the first bundle to the fifth bundle, such that they can be formed at positions in the battery arrays 100 whilst still having the proximity that offers the advantages of the invention.

As shown in FIG. 4D, an additional extension tab 22 may be formed at any one of the anode and cathode output terminals 20, 20' in order to further reduce the distance between the output terminals 20, 20', by locating both output terminals 20, 20' at the outer circumference of the same battery 10. The extension tab 22 of the this embodiment extends from the anode output terminals 20 to the outer circumference of the battery 10, where the cathode output terminal 20' is positioned. The additional extension tab 22 allows the anode output terminal 20 to extend toward the outer circumference of the lower battery 10 where the cathode output terminal 20' is positioned. The additional extension tab 22 can be provided as a integral body extended from the anode output terminal 20 or a separate body coupled to the anode output terminal 20 by welding. An extension tab could alternatively be provided on the cathode output terminal 20'. In such a case, the extension tab would extend towards the outer circumference of the first bundle B1.

It is preferable to use cylindrical batteries 10 for the battery arrays 100 of this embodiment, but the shape is not specifically limited thereto, for example prismatic batteries can be used for all or just a part of the array, as shown in Figures 4G to 4I. Further, the connection tab 21 of this embodiment may be made of nickel or a nickel alloy.

It should be understood that the positions of the anodes and the cathodes may be exchanged, and the same result can be achieved.

### <Embodiment 2>

Embodiment 2 takes the form of a 7S2P battery array, in which N is 3 and M is 1.

As in Embodiment 1, the batteries are arranged in bundles. Each bundle is composed of two batteries and a total of seven bundles are provided.

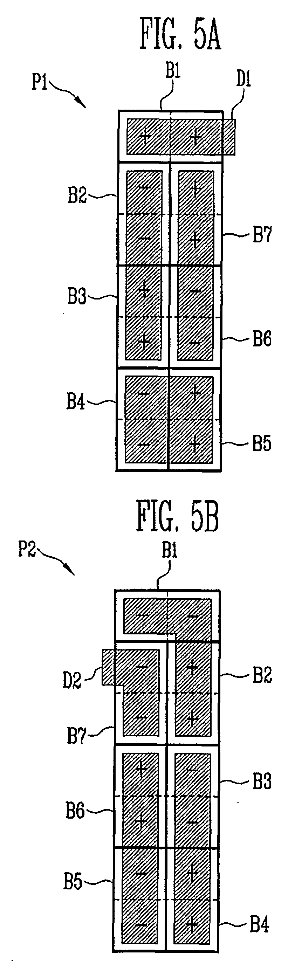

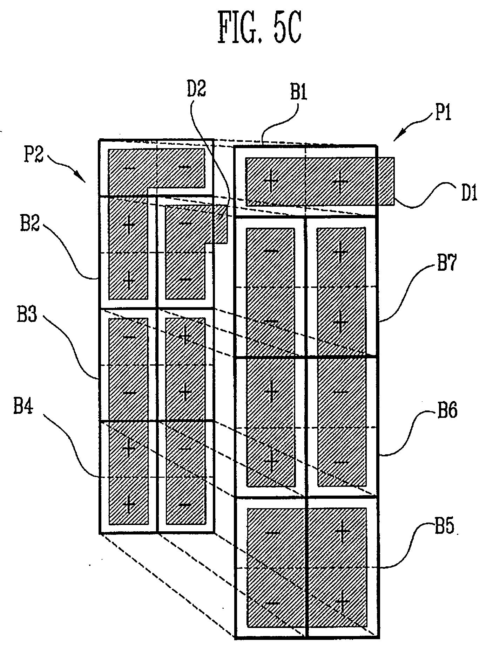

As shown in FIG. 5A, a first bundle B1 is arranged in the first row, such that its anodes are located in P1, and second to seventh bundles B2-B7 are sequentially vertically arranged counterclockwise from the second column and the first row (2,1) such that they form a closed loop. In this arrangement, the bundles are arranged such that consecutive bundles have alternating polarities within each of P1 and P2. As shown in FIG. 5B, the polarities of the bundles are the opposite way to P1 at the other side P2.

Connection tabs are provided on each of P1 and P2 in a similar fashion to Embodiment 1. That is, the connection tabs are provided to connect, or to enable connection of the batteries of each bundle, and thereby connect the first bundle to the seventh bundles in series.

Meanwhile, as with Embodiment 1, the polarities of the bundles may be reversed. Further, the features of Embodiment 1 can be applied in the same way to both output terminals D1, D2.

### <Embodiment 3>

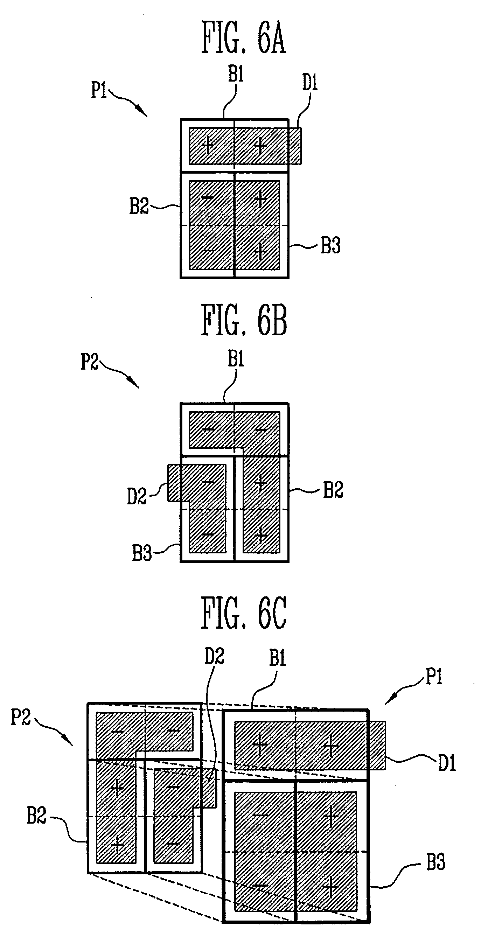

Embodiment 3 exemplifies when N is 1 and M is 1, that is, a 3S2P battery array. Embodiment 3 is described with reference to FIGS. 6A to 6C. FIG. 6A is a conceptual diagram showing one side of the 3S2P battery array and FIG. 6B is a conceptual diagram showing the other side of the battery array of FIG. 6A. FIG. 6C is a conceptual diagram of the battery array of FIG. 6A, projected from one side to the other side.

In the 3S2P battery array, as shown in FIG. 6A, a first bundle B1 is horizontally arranged in the first column and the second column of the first row and then a second bundle B2 and a third bundle B3 are arranged vertically counterclockwise. The first bundle to the third bundle form a closed loop, similar to Embodiment 1 described above. In this arrangement, the second bundle and the third bundle are arranged such that the cathode of one and the anode of the other are located in the same side. The polarities at side P2 are opposite to those at side P1. This can be clearly understood from FIG. 6C.

In forming embodiments of the invention, a common arrangement method can be applied. This method applies to all of the 5S2P, 7S2P, and 3S2P arrays, which are described above, and any other (2N+1)S2P (N is a natural number) battery array.

It will be understood that it is possible to implement battery arrays simply by arranging batteries in bundles and connecting the arranged bundles in series. It will also be understood that the method of arranging the batteries is important, because the process of connecting the arranged bundles is only to sequentially connect the bundles in series. Therefore, a method of configuring (2N+1)S2P battery arrays will be generalized below. This method is helpful in forming embodiments of the invention, but it is not necessary for all embodiments to be formed in this way. It should be understood that once the polarities of the batteries are arranged at one side (i.e. in one aspect of the layer), the polarities at the other side are correspondingly determined. Therefore, describing the arrangement of the polarities at one side is sufficient.

The method can be summarised as follows:

1. Form the first bundle to the (2N+1) bundle by dividing the batteries into a series of groups of two parallel batteries.

2. Sequentially arrange the first bundle to the (2N+1)th bundle to construct a closed loop (i.e. with the first and (2N+1)th bundles mutually adjacent).

3. Arrange the bundles such that the anodes and the cathodes from consecutive bundles alternate.

Within side P1 in Embodiment 1, it can be seen that the batteries are configured in the bundles of which the same terminals are connected. Further, the first bundle B1 to the fifth bundle B5 are sequentially arranged to be adjacent to each other. In this arrangement, it can be seen that the last one, the fifth bundle B5 is arranged adjacent to the first bundle such that the first bundle to the fifth bundle form a closed loop. Therefore, Embodiment 1 satisfies all of the first to third rules described above. This is the same in Embodiment 2 and Embodiment 3.

It will be noted that, the first bundle Bland the fifth bundle B5 exhibit the same polarities at the side P1. This is the same in the generalized configuration. That is, the first bundle 1 and the (2N+1)-th bundle exhibit the same polarities at the same side. Therefore, when a terminal having positive or negative polarity is formed at the first bundle at a first side, a terminal having negative or positive polarity is formed at the (2N+1)-th bundle at the second side, such that a pair of electrode terminals having positive and negative polarity can be formed in close proximity. In this case, since the first bundle and the (2N+1)-th bundle are adjacent to each other, the distance between both terminals is minimized.

Meanwhile, the start position of the first bundle in the second rule is not limited to Embodiments 1 to 3. That is, the first bundle can be positioned anywhere in the battery array. That is, it may be arranged in the first row, as in Embodiment 1 to 3, may be arranged in the last, the fifth row and any one of the first column and the second column.

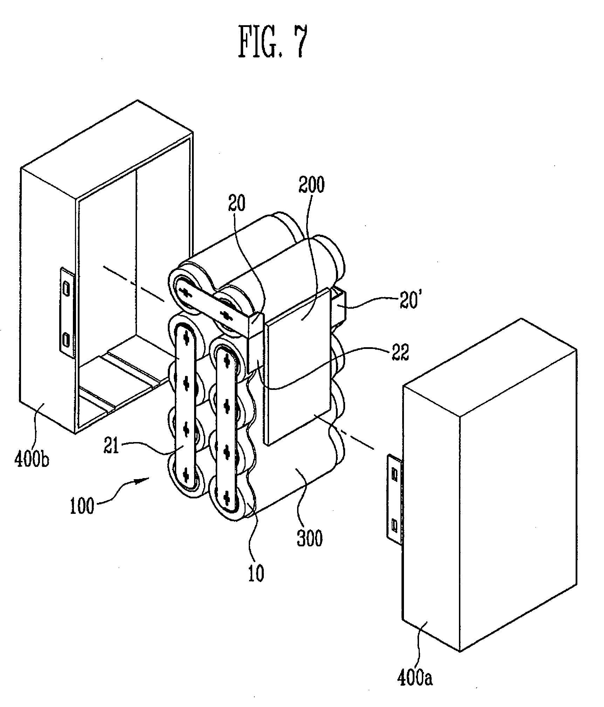

A schematic structure of a battery pack having a battery array 100 such as described above will now be described with reference to FIG. 7.

Output terminals 20, 20' are connected to a protection circuit module 200, PCM on a printed circuit board. In this configuration, it is possible to further form the extension tab to further reduce the gap between the terminals, as described above. In this case, the extension tab 22 and the other output terminal (20 or 20') without the extension 22 are connected to the protection circuit module 200.

A holder case 300 supports the arranged battery arrays 100 and functions as a support where the protection circuit module 200 is fixed. Outer cases 400a, 400b protect the components therein against external shock. The outer cases 400a, 400b may have a connecting portion (not shown) that connects the protection circuit module 200 with an external circuit, if needed.

<Embodiment 4>

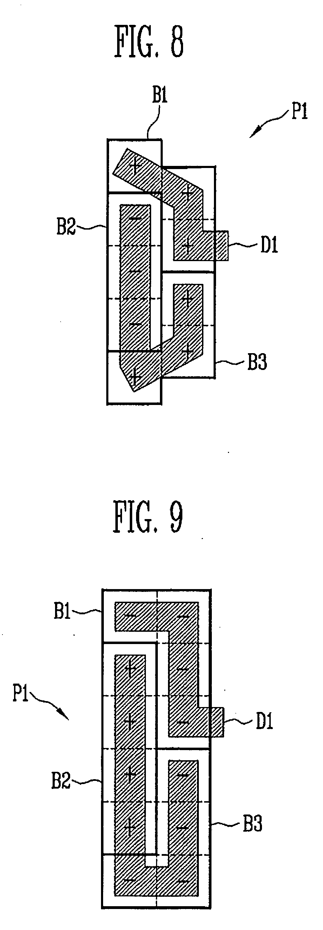

Embodiment 4 is described with reference to FIG. 8. FIG. 8 is a conceptual diagram showing one side of a 3S3P battery array according to the present invention. In this embodiment, one bundle is composed of three parallel batteries. This corresponds to when (M+1) is an odd number in the (2N+1)S(M+1)P expression of the battery array configuration (N and M are natural numbers).

Since the number of bundles connected in series is odd, the total number of batteries is an odd number, when the number of batteries of one bundle is an odd number. Therefore, as shown in FIG. 8, the numbers of batteries are different in the first column and the second column.

In the 3S3P battery array, a first bundle B1 is arranged from the second column and the first and second rows to the first column and the first row with reference to a side of the battery array (PI). Thereafter, a second bundle B2 is arranged from the first column and second row to the first column and the fourth row. Similarly, a third bundle B3 is arranged in the first column and the fifth row, the second column and the fourth row, and the second column and the third row. The first to third bundles B1, B2, B3 are arranged as a closed loop and the polarities of the bundles are alternately arranged from bundle to bundle.

Embodiments 1 to 3 described above have the feature that the start point of the first bundle B1 is the second column and the second row. Conversely, the output terminal is formed at the center portion of the battery arrays in this embodiment.

<Embodiment 5>

Embodiment 5 is described with reference to FIG. 9. FIG. 9 is a conceptual diagram showing one side of a 3S4P battery array according to the present invention.

In this embodiment, one bundle is composed of four parallel batteries. This corresponds to when (M+1) is an even number in the (2N+1)S(M+1)P expression.

As shown in FIG. 9, a first bundle B1 is arranged in the second column and the third to first rows, and the first column and the first row. A second bundle B2 is arranged in the first column and the second to fifth rows. Similarly, a third bundle B3 is arranged in the first column and the sixth row and the second column and the sixth to the fourth rows. The first to third bundles B1, B2, B3 are arranged as a closed loop and the polarities of the bundles are alternately arranged from bundle to bundle.

Although preferred embodiments of the present invention have been described above, the scope of the present invention is not limited to the preferred embodiments and can be implemented by a variety of battery arrays and a battery packs having the battery arrays without departing from the scope of the present invention described in the claims.

## Claims

1. A battery (100) array comprising:
a plurality of batteries (10) arranged in a layer such that each battery has one of its anode and its cathode located substantially at a first aspect of the layer and the other of its anode and its cathode located substantially at a second aspect of the layer that is opposite to the first aspect;
a plurality of connection tabs (21), each connection tab (21) being situated on one of the first and second aspects of the layer and forming an electrical connection between a respective selection of the said batteries; and
first and second terminals (20, 20') for forming an electrical connection with the array (100);
wherein the batteries (10) are arranged within the layer in groups, such that the respective batteries within each group are electrically connected in parallel by a respective one of the said connection tabs (21) and the groups are electrically connected in series with sequentially alternating polarities by the said connection tabs (21) to form a current path;
wherein
each group is formed from M+1 said batteries (10), wherein M is a positive integer;
the layer is formed from 2N+1 said groups, wherein N is a positive integer;
one of the first and second terminals (20, 20') is connected to the first group in the current path and the other of the first and second terminals (20, 20') is connected to the (2N+1)th group in the current path; and
the said first group in the current path and the said (2N+1)th group in the current path are mutually adjacent within the said layer, wherein the said groups are arranged substantially in a closed loop and wherein from the said first group to the said (2N+1)th group, the polarities of the groups alternate within one of the said aspects, the battery array further comprising an extension tab (22) connected to one of the said first and second terminals (20, 20'), the said extension tab (22) extending from the said one of the first and second terminals (20, 20') towards a battery (10) to which the other of the first and second terminals (20, 20') is connected.

2. A battery array according to Claim 1, wherein one of the first and second terminals (20, 20') extends from the first aspect of the layer and the other of the first and second terminals (20, 20') extends from the second aspect of the layer.

3. A battery array according to any preceding claim, wherein the said first group and the said (2N+1)th group are arranged with their respective anodes in the same aspect of the layer.

4. A battery array according to any preceding claim, wherein, within one of the said aspects, one of the said groups has its batteries (10) arranged side-by-side in a first direction and the remainder of the groups each have their respective batteries (10) arranged side-by-side in a second direction that is substantially perpendicular to the first direction.

5. A battery array according to any preceding claim, wherein each of the first and second terminals (20, 21') is connected to a respective one of the connection tabs (21).

6. A battery array according to any preceding claim, wherein the extension tab (22) is integrally formed with the said one of the first and second terminals (20, 20').

7. A battery array according to any preceding claim, wherein the extension tab (22) is welded to the said one of the first and second terminals (20, 20').

8. A battery array according to any preceding claim, wherein each of the said batteries (10) is a cylindrical or prismatic battery.

9. A battery array according to any preceding claim, wherein the connection tabs (21) comprise nickel or a nickel alloy.

10. A battery pack comprising:
a battery array (100) according to any preceding claim; and
a protection circuit module connected with the said first and second terminals.

## Patentansprüche

1. Batterieanordnung (100), umfassend:
eine Vielzahl von Batterien (10), die in einer Schicht angeordnet sind, sodass sich bei jeder Batterie eine von ihrer Anode und ihrer Kathode im Wesentlichen an einer ersten Seite der Schicht und die andere von ihrer Anode und ihrer Kathode im Wesentlichen an einer zweiten Seite der Schicht, die der ersten Schicht gegenüberliegt, befindet;
eine Vielzahl von Verbindungskontaktfahnen (21), wobei sich jede Verbindungskontaktfahne (21) an einer der ersten und zweiten Seiten der Schicht befindet und eine elektrische Verbindung zwischen einer jeweiligen Auswahl der Batterien bildet; und
erste und zweite Anschlüsse (20, 20') zum Bilden einer elektrischen Verbindung mit der Anordnung (100);
worin die Batterien (10) innerhalb der Schicht in Gruppen angeordnet sind, sodass die jeweiligen Batterien innerhalb jeder Gruppe durch eine jeweilige der Verbindungskontaktfahnen (21) elektrisch parallel geschaltet sind und die Gruppen durch die Verbindungskontaktfahnen (21) elektrisch in Reihe geschaltet sind, und zwar mit der Reihe nach abwechselnden Polaritäten, um einen Strompfad zu bilden;
worin
jede Gruppe aus M+1 besagten Batterien (10) gebildet wird, worin M eine positive ganze Zahl ist;
die Schicht aus 2N+1 besagten Gruppen gebildet wird, worin N eine positive ganze Zahl ist;
einer der ersten und zweiten Anschlüsse (20, 20') mit der ersten Gruppe im Strompfad verbunden ist und der andere der ersten und zweiten Anschlüsse (20, 20') mit der (2N+1)-ten Gruppe im Strompfad verbunden ist; und
die erste Gruppe im Strompfad und die (2N+1)-te Gruppe im Strompfad innerhalb der Schicht aneinander angrenzen, worin die Gruppen im Wesentlichen in einer geschlossenen Schleife angeordnet sind und worin von der ersten Gruppe bis zu der (2N+1)-ten Gruppe die Polaritäten der Gruppen sich innerhalb einer der Seiten abwechseln, wobei die Batterieanordnung ferner eine Erweiterungskontaktfahne (22) umfasst, die mit einem der ersten und zweiten Anschlüsse (20, 20') verbunden ist, wobei sich die Erweiterungskontaktfahne (22) von dem einen der ersten und zweiten Anschlüsse (20, 20') zu einer Batterie (10) erstreckt, mit welcher der andere der ersten und zweiten Anschlüsse (20, 20') verbunden ist.

2. Batterieanordnung nach Anspruch 1, worin sich einer der ersten und zweiten Anschlüsse (20, 20') von der ersten Seite der Schicht erstreckt und sich der andere der ersten und zweiten Anschlüsse (20, 20') von der zweiten Seite der Schicht erstreckt.

3. Batterieanordnung nach einem der vorhergehenden Ansprüche, worin die erste Gruppe und die (2N+1)-te Gruppe mit ihren jeweiligen Anoden auf der gleichen Seite der Schicht angeordnet sind.

4. Batterieanordnung nach einem der vorhergehenden Ansprüche, worin innerhalb einer der Seiten die Batterien (10) einer der Gruppen nebeneinander in einer ersten Richtung angeordnet sind und die jeweiligen Batterien (10) der übrigen Gruppen nebeneinander in einer zweiten Richtung angeordnet sind, die im Wesentlichen senkrecht zur ersten Richtung ist.

5. Batterieanordnung nach einem der vorhergehenden Ansprüche, worin jeder der ersten und zweiten Anschlüsse (20, 21') mit einer entsprechenden der Verbindungskontaktfahnen (21) verbunden ist.

6. Batterieanordnung nach einem der vorhergehenden Ansprüche, worin die Erweiterungskontaktfahne (22) einstückig mit dem einen der ersten und zweiten Anschlüsse (20, 20') ausgebildet ist.

7. Batterieanordnung nach einem der vorhergehenden Ansprüche, worin die Erweiterungskontaktfahne (22) mit dem einen der ersten und zweiten Anschlüsse (20, 20') verschweißt ist.

8. Batterieanordnung nach einem der vorhergehenden Ansprüche, worin jede der Batterien (10) eine zylinderförmige oder prismenförmige Batterie ist.

9. Batterieanordnung nach einem der vorhergehenden Ansprüche, worin die Verbindungskontaktfahnen (21) Nickel oder eine Nickellegierung umfassen.

10. Batteriepack, umfassend:
eine Batterieanordnung (100) nach einem der vorhergehenden Ansprüche; und
ein Schutzschaltungsmodul, das mit den ersten und zweiten Anschlüssen verbunden ist.

## Revendications

1. Réseau de batteries (100), comprenant :
plusieurs batteries (10), agencées dans une couche, de sorte que chaque batterie comporte un élément, son anode ou sa cathode, agencé essentiellement au niveau d'un premier côté de la couche, l'autre élément, son anode ou sa cathode, étant agencé essentiellement au niveau d'un deuxième côté de la couche, opposé au premier côté ;
plusieurs pattes de connexion, (21), chaque patte de connexion (21) étant située sur un des premier et deuxième côtés de la couche et établissant une connexion électrique entre une sélection respective desdites batteries ; et
des première et deuxième bornes (20, 20') pour établir une connexion électrique avec le réseau (100) ;
dans lequel les batteries (10) sont agencées dans la couche en groupes, de sorte que les batteries respectives dans chaque groupe sont connectées électriquement en parallèle par une patte respective desdites pattes de connexion (21), les groupes étant connectés électriquement en série, avec des polarités à alternation séquentielle, par lesdites pattes de connexion (21) pour former un trajet de courant ;
dans lequel :
chaque groupe est formé par M+1 desdites batteries (10), M étant un nombre entier positif ;
la couche est formée par 2N+1 desdits groupes, N étant un nombre entier positif ;
une des première et deuxième bornes (20, 20') est connectée au premier groupe dans le trajet du courant, l'autre des première et deuxième bornes (20, 20') étant connectée au (2N+1)^{ème} groupe dans le trajet du courant ; et
ledit premier groupe dans le trajet du courant et ledit (2N+1)^{ème} groupe dans le trajet du courant sont mutuellement adjacents dans ladite couche, lesdits groupes étant agencés essentiellement dans une boucle fermée, et dans lequel, dudit premier groupe audit (2N+1)^{ème} groupe, les polarités des groupes changent dans l'un desdits côtés, le réseau de batteries comprenant en outre une patte d'extension (22), connectée à l'une desdites première et deuxième bornes (20, 20'), ladite patte d'extension (22) s'étendant de ladite une desdites première et deuxième bornes (20, 20') vers une batterie (10) à laquelle est connectée l'autre desdites première et deuxième bornes (20, 20').

2. Réseau de batteries selon la revendication 1, dans lequel l'une des première et deuxième bornes (20, 20') s'étend à partir du premier côté de la couche, l'autre des première et deuxième bornes (20, 20') s'étendant à partir du deuxième côté de la couche.

3. Réseau de batteries selon l'une quelconque des revendications précédentes, dans lequel ledit premier groupe et ledit (2N+1)^{ème} groupe sont agencés avec leurs anodes respectives dans le même côté de la couche.

4. Réseau de batteries selon l'une quelconque des revendications précédentes, dans lequel, dans l'un desdits côtés, un desdits groupes comporte ses batteries (10) agencées côte à côte dans une première direction, les groupes restants comportant chacun leurs batteries respectives (10) agencées côte à côte dans une deuxième direction, essentiellement perpendiculaire à la première direction.

5. Réseau de batteries selon l'une quelconque des revendications précédentes, dans lequel chacune des première et deuxième bornes (20, 21') est connectée à une patte respective des pattes de connexion (21).

6. Réseau de batteries selon l'une quelconque des revendications précédentes, dans lequel la patte d'extension (22) est formée d'une seule pièce avec ladite une borne desdites première et deuxième bornes (20, 20').

7. Réseau de batteries selon l'une quelconque des revendications précédentes, dans lequel la patte d'extension (22) est soudée sur ladite une borne desdites première et deuxième bornes (20, 20').

8. Réseau de batteries selon l'une quelconque des revendications précédentes, dans lequel chacune desdites batteries (10) est une batterie cylindrique ou prismatique.

9. Réseau de batteries selon l'une quelconque des revendications précédentes, dans lequel les pattes de connexion (21) comprennent du nickel ou un alliage de nickel.

10. Bloc-batterie, comprenant :
un réseau de batteries (100) selon l'une quelconque des revendications précédentes ; et
un module de circuit de protection connecté aux dites première et deuxième bornes.
